# EUROPEAN PATENT SPECIFICATION

(11) **EP 0 839 004 B1**
(45) Date of publication and mention of the grant of the patent: **28.08.2002**
(21) Application number: 97921724.7
(22) Date of filing: 23.04.1997
(51) Int. Cl.: A23K 1/16, A23K 1/18

(54) **METHOD FOR PRODUCING FEED PELLETS**
VERFAHREN ZUR HERSTELLUNG VON FUTTERPELLETS
PROCEDE DE PRODUCTION D'ALIMENTS GRANULES

(30) Priority: 15.05.1996 GB 9610114
(43) Date of publication of application: 06.05.1998
(73) Proprietor: Ewos Limited, Bathgate EH48 3BP (GB)
(72) Inventor: NISSINEN, Vesa Juhani, Linlithgow, West Lothian EH49 7LH (GB); OHNSTAD, Vebjorn, N-0969 Oslo 9 (NO)
(74) Representative: Lethem, David J.
(86) International application number: EP9702074
(87) International publication number: WO97042838

(56) References cited:
- EP-A- 0 321 337
- EP-A- 0 556 883
- US-A- 4 505 936
- US-A- 4 900 556
- PATENT ABSTRACTS OF JAPAN vol. 018, no. 562 (C-1265), 27 October 1994 & JP 06 205649 A (SATAKE ENG CO LTD), 26 July 1994,

## Description

This invention relates to a method for producing feed pellets suitable for feeding to animals such as fish, poultry, dogs, cats and swine. The invention relates in particular to such a method in which a bioactive ingredient is loaded onto pre-formed porous precursor feed pellets.

Conventional feed pellets for domestic animals are usually formed from a solid base material loaded with a fat or oil component. The solid base material may be protein-based such as fishmeal, or carbohydrate-based such as a cereal product e.g. starch. The fat or oil component, which may be derived from natural sources such as animals or plants, is loaded into pores present in precursor feed pellets formed from the base material. The fat or oil increases the overall energy content of the feed.

In intensive rearing of domestic animals for meat or fish production, in addition to fulfilling the animals' energy requirements, the feed also has to fulfil additional requirements. These requirements can include the prevention or treatment of diseases and imparting a desirable flesh colour or flesh texture to an animal. Thus, feeds for domestic animals also contain various ingredients such as vitamins, minerals, enzymes, colouring agents e.g. carotenoid pigments, and/or pharmaceutically active compounds. Additives of this type are hereafter termed bioactive ingredients.

The extent to which the above requirements can be met in the production of feed pellets is however limited. In most cases, commercially produced feed pellets are obtained by compacting or pelletizing the base material, typically by extrusion. The loading of the base material with the fat or oil component and the bioactive ingredient can be effected either by mixing the afore-mentioned components prior to the pelletizing step, or by loading the fat or oil component and the bioactive ingredient into the pellets after pelletizing the base material.

Mixing all the components of the feed prior to extrusion has limitations. In particular, pellet durability may be poor due to the oil component interfering with the pelletizing step. Furthermore, pelletizing the entire feed mixture is disadvantageous in that many bioactive ingredients, such as carotenoid pigments, lose their activity upon being subjected to heat in the pelletizing device, such as an extruder.

Because of this problem, feed production moved to the addition of the fat or oil component and bioactive ingredient(s) after the pelletizing step, by absorption of these additional components into pores of pre-formed pellets. Proceeding in this way prevents the loss of activity of the bioactive ingredients as no high temperature heat treatment step is required after their loading. In addition relatively high levels of oil can be loaded on the preformed pellets. However, the penetration of bioactive ingredients into the preformed pellets has proven to be unsatisfactory in some cases. This was found to be especially so when loading bioactive ingredients which are commercially available in coated form into the pre-formed pellets. For example, Carophyll® Pink (manufactured by Hoffmann LaRoche), which is a widely used pigment for inclusion in fish feed, is sold in the form of beadlets. These beadlets consist of a core of astaxanthin (a dye which improves the flesh colour of salmonids) having a diameter about 100-150µm and a shell having a diameter about 200-300µm formed from gelatin, carbohydrates and antioxidants. The reasons for the presence of this shell are to facilitate handling of the bulk material and because astaxanthin is somewhat labile in its natural form and so loses its bioactivity when exposed to the environment. Each beadlet comprises about 5-15% by weight astaxanthin.

When loading pre-formed pellets with such coated bioactive ingredients, it has been found that their penetration into the pellets is unsatisfactory due to their size and a fair proportion of beadlets are deposited only on the pellets' surface. This effect is particularly disadvantageous when preparing fish feed since the surface-deposited beadlets are washed away when the feed comes into contact with water. Furthermore, it has been found that feed produced using such beadlets loses some of its initial bioactivity during storage as the surface deposited beadlets become detached. The same is true for pellets coated with pigment contained within yeast cells or yeast cell fragments. Accordingly, such methods do not make efficient use of the bioactive ingredient which is economically disadvantageous because such ingredients are relatively expensive.

It is an object of the present invention to overcome the above-mentioned difficulties previously experienced with coated bioactive ingredients and to thus provide improved methods for producing feed pellets.

The present invention provides a method for loading a bioactive ingredient into feed pellets, the bioactive ingredient having a protective shell formed from gelatin or a carbohydrate coated around it, comprising the steps of:
(i) removing the gelatin or carbohydrate protective shell from around the bioactive ingredient enzymatically or by hydrolysis;
(ii) mixing the uncoated bioactive ingredient with a fat or oil; and
(iii) loading porous precursor feed pellets with the resulting mixture to produce feed pellets.

The feed pellets produced according to the method of the present invention are particularly advantageous in that the activity of the bioactive ingredient does not substantially diminish even after prolonged storage of the loaded pellets due to improved penetration of the bioactive ingredient into the pellets. This protects it from oxidation if labile. Furthermore, the resulting feed pellets do not suffer any substantial loss of the bioactive ingredient when contacted with water. These advantages ensure efficient uptake of the bioactive ingredient by the animal fed therewith. The feed pellets produced according to the method of the present invention are also advantageous in making efficient use of relatively expensive bioactive ingredient. In particular, as the bioactive ingredient is not mixed with the raw materials forming the feed pellets pre-extrusion, there are no losses through extrusion and drying of the feed which previously could lead to around 10-20% by weight of pigment being lost due to effects such as heat, moisture and friction.

In the method of the present invention, the fat or oil component has several functions. The first is to act as an energy component in the resulting feed pellets. The second is to act as a vehicle for the uncoated bioactive ingredient to facilitate its loading into the porous precursor feed pellets. Finally, it has been found that the fat or oil component, especially fish oil, has an anti-oxidative effect and so prevents deactivation of the bioactive ingredient when mixed with it after removal of the protective shell.

Bioactive ingredients, as referred to herein, include nutritional additives such as vitamins, antioxidants, minerals, prophylactic agents, proteins such as enzymes (e.g. phytases, amylases or proteases), pharmacologically active substances, or pigments, such as a carotenoid, for imparting a desirable flesh colour to an animal.

In fish farming, and in particular farming of salmonids, adding pigments to the feed is of great importance in order to produce fish having pink flesh which improves the market value of the fish. Common pigments which are added to salmon feed are carotenoid pigments such as astaxanthin, zeaxanthin, canthaxanthin and β-carotene, of which astaxanthin and canthaxanthin are most preferred. These pigments are commercially available in bulk e.g. under the tradename Carophyll (manufactured by Hoffmann LaRoche). Carophyll® Pink and Carophyll® Red are available in the form of beadlets respectively comprising chemically synthesized astaxanthin and canthaxanthin coated with a protective shell of gelatin and starch.

The protective shell around the bioactive ingredient is removed by hydrolysis or, most preferably, enzyme-mediated breakdown.

The enzymes used for removing the coating from the bioactive ingredient are not particularly limited as long as they are capable of removing the coating without adversely affecting the bioactive ingredient. Suitable enzymes include proteases, amylases, mannanases and glucanases. If, for example, the coated active ingredient to be used in the process according to the present invention is the afore-mentioned Carophyll® Pink, suitable proteolytic enzymes include Maxatase®, Delvolase® and Multifect®.

The conditions under which the coating of the bioactive ingredient is enzymically removed are not particularly restrictive as long as the enzyme retains sufficient activity. In other words, it is not necessary to use the enzyme at or close to its maximum activity, even though such conditions are preferred in regard to process efficiency. Generally, enzymes are only active in an aqueous environment so that removal of the coating is normally performed in an aqueous solution. For instance, the beadlets of bioactive ingredient are suspended in water and treated with an enzyme at a suitable temperature and pH. The pH can be adjusted if necessary by adding a buffer to the mixture. The concentration, by weight, of the bioactive ingredient in the resulting aqueous solution may be 1-30%, preferably 5-20%, and most preferably 10-15%.

For example, suitable conditions for the preferred enzymes Maxatase®, Delvolase® and Multifect® for removing the coating from Carophyll® Pink beadlets would be as follows.

For Maxatase®, a sufficient activity is achieved at a pH of 7 to 11, with 9.5-10 being preferred, at a temperature of 55°C or higher, 60-65°C being preferred.

For Delvolase®, the pH is suitably within the range of 5 to 11, with 9.5-10.5 being preferred, at a temperature of 90°C or less, 60°C being preferred.

For Multifect®, the pH is suitably within the range 4.5 to 11, with 6.5-8.5 being preferred, at a temperature of 60°C or less, 50-55°C being preferred.

The weight ratio of the enzyme added to the coated bioactive ingredient to cause the shell to disintegrate may be 1:100-10,000, preferably 1:500-5,000, most preferably about 1:1,000.

In the second step of the method according to the present invention, the uncoated bioactive ingredient is mixed with a fat or oil. The composition including the uncoated bioactive ingredient following the first shell removal step may or may not be concentrated or purified prior to this mixing step, depending on the circumstances.

The fat or oil used in the method according to the present invention can be of any origin, but fats and oils obtained from plant or animal sources are generally preferred. The fat or oil may be a single compound or a mixture. It is also possible to use fat and oil in admixture. The fat or oil may be one or more of fish oil such as menhaden oil, herring oil, capelin oil; a saturated trigylceride or saturated fatty acid thereof such as hydrogenated rapeseed oil, hydrogenated soybean oil, hydrogenated sun flower oil, hydrogenated olive oil, hydrogenated palm oil, hydrogenated coconut oil, glyceryl tristearate, glyceryl tripalmitate, stearic acid, palmitic acid, hydrogenated fish oil, tallow and lard. The above saturated triglycerides all have melting points above 40°C and usually higher, close to 60°C or more. Accordingly, they need to be heated above their melting points in order to mix them sufficiently with the uncoated bioactive ingredient resulting from the first step of the method of the invention.

Preferably, the fat or oil is solid or highly viscous at ambient temperature as this helps to retain it and the bioactive ingredient in the loaded feed pellets. At the time of mixing, however, the fat or oil composition should be liquid or at least of low viscosity in order to ensure uniformity of mixing. Accordingly, the mixing of the uncoated bioactive ingredient and the fat or oil is preferably carried out above ambient temperature. However, as the bioactive ingredient may be thermosensitive, the temperature in this mixing step should be well below the temperature at which the bioactive ingredient begins to lose its bioactivity. Thus, the use of a fat or oil having a melting point slightly above ambient temperature, i.e. a melting point of 60°C or less and preferably 45°C or less, is preferred.

The amount of bioactive ingredient (on a weight basis) added to the oil or fat may be 1.0-5000 per 1,000,000 parts by weight, preferably 50-1,000 per 1,000,000 parts by weight, and most preferably about 250 per 1,000,000 parts by weight.

In the mixing step it is also possible to add further bioactive ingredients to the coating composition for further improving the characteristics of the feed. Examples of such additional ingredients are additional oils including lipids, vitamins, minerals, prophylactic agents, pharmacologically active compounds, flavouring agents, preservatives, antioxidants and other common feed additives.

In the final step of the method provided by the present invention, the mixture resulting from step (ii) is loaded into porous precursor feed pellets. The porous precursor feed pellets can be formed according to any common pelletizing method, e.g. compacting, extruding and the like. The precursor feed pellets can be obtained from any conventional material commonly used such as carbohydrates or protein as discussed above. Preferred materials include fish powder, meat and bone powder, krill meal, soybean meal, corn gluten meal, torula yeast, wheat powder, starch, rice, bran and the like. The precursor feed pellets are porous to ensure that they can be loaded with the mixture of the bioactive ingredient and fat or oil. For this reason, extruded pellets are preferred since these allow the porosity of pellets obtained to be varied within broad limits. The preferred density of the pellets is 200-800 g/cm³, preferably 500 g/cm³. Such pellets preferably have an average pore size of 10-50µm, and more preferably about 25µm.

In the loading step of the method of the present invention, one part by weight of the porous precursor feed pellets are mixed with 0.05-1.0 parts by weight of the mixture of the bioactive ingredient and fat or oil, preferably 0.1-0.5 parts by weight and most preferably 0.3 parts by weight. This amount is suitably adjusted according to the intended purpose. For instance, when fish flesh colour is to be rapidly improved immediately prior to the shipment of the farmed fish, feed pellets with a high astaxanthin content are fed to the fish, and when the colour is to be improved gradually, feed pellets with a low astaxanthin content may be given.

The precursor feed pellets may be loaded immediately after extrusion, but to minimise the decomposition of the bioactive ingredient, it is best to load the pellets after they have cooled somewhat. However, depending upon the fat or oil in which the bioactive ingredient is present, the temperature should be controlled so that the mixture of the bioactive ingredient and the fat or oil is in a liquid state.

The loading of the feed pellets with the mixture of bioactive ingredient and the fat or oil can be carried out by mixing, dipping, spraying, coating, or another such means. For example, loading can be carried out by subjecting the precursor feed pellets and oil mixture containing the bioactive ingredient to rotary mixing in a drum under normal pressure, but the operation can also be carried out under elevated or reduced pressure.

In a preferred aspect of the present invention, the loading is carried out at below ambient pressure as described in DE-A-2 933 261, EP-A-0 556 883 or GB-A-2 232 573. The loading methods described in these three publications are incorporated herein by reference. Such methods are preferred as they enable relatively high amounts of the mixture of the bioactive ingredient and fat or oil to be loaded into the feed pellets. Thus, it is preferred that the porous precursor feed pellets are first subjected to reduced pressure, and then simultaneously or subsequently the pellets are contacted with the mixture of the bioactive ingredient and the fat or oil. The pressure during this step is around 0.20 kPa and the loading step is carried out for about 1-30 minutes, more preferably 1-5 minutes. Commercial apparatus is readily available which is suitable for this step, and in which the vacuum pressure is adjustable. A specific example is the apparatus sold under the trade mark Vario-Vac, manufactured by Dorit Maschinen Handels AG. After carrying out loading under reduced pressure, the pressure is then returned to ambient pressure. This causes the bioactive ingredient to be forced into the interior of the feed pellets.

In order to ensure good penetration into the precursor pellets of the mixture of the bioactive ingredient and the fat or oil, the temperature should be controlled so that the mixture is liquid or at least has a low viscosity. Accordingly, the temperature ranges indicated in connection with the mixing step (ii) described above are also preferred for the loading step.

For warming the feed pellets to a suitable temperature for loading, it is possible either to charge the cold pellets into the reactor and to warm the pellets there, or to charge the reactor with pre-heated pellets. This can be achieved by storing the precursor pellets in a silo in which the pellets are heated to the desired temperature using hot air.

The loaded feed pellets obtained according to step (iii) can be used as feed just as they are, but they can be further loaded with additional oil as a subsequent step. This can suppress air oxidation and decomposition of the bioactive ingredient, such as astaxanthin, during storage. The oil used in this subsequent loading step may be either a vegetable oil or animal oil (e.g. fish oil), with no limitation whatsoever. This oil can also be mixed with components, such as propyleneglycol, sucrose fatty acid esters, glycerol fatty acid esters, lecithin and other such pospholipids, sorbitan fatty acid esters, gum arabic, dextrin, polyoxyethylene sorbitan fatty acid esters, polysorbates, vitamin A, A-tocopheryl polyethylene glycol succinate, and so on.

The feed pellets produced by the present invention have the advantage of extremely high retention of the bioactive ingredient during storage, and even when placed in water as e.g. a fish food. Accordingly, such pellets enable extremely high up-take of the bioactive ingredient by the animal with minimal loss of bioactive ingredient by spoilage or to the environment.

### EXAMPLE

Four test feeds for feeding to salmon were prepared each starting from base pellets produced by a Wenger X-20 single screw extruder operating at 150 kg/hr. The base pellets have a diameter of 6mm, a length of 8mm and are roughly cylindrical in shape. The base pellets were formed from a mix consisting in terms of weight % of 70.5% fish meal; 22.3% pre-processed corn starch (source of carbohydrate); 6.2% fish oil; and 1% of a vitamin and mineral pre-mix.

### Feed 1 (Invention)

Carophyll® Pink was added to an aqueous solution containing 1 mg/ml Maxatase® which was buffered to a pH of 9.2 to give a suspension comprising 120 mg of Carophyll® Pink per ml. The aqueous solution was formed by mixing 500 ml of 0.05 M NaHCO₃, 50 ml of 0.1 N NaOH and 450 ml of distilled water at 50°C. After the enzymatic reaction was completed one hour after mixing, 4.5 parts by weight of the reaction mixture was mixed with 95.5 parts by weight of capelin oil containing 0.1 % by weight of ethoxyquin as an antioxidant to produce a coating composition.

3.6. kg of the thus obtained coating composition were loaded onto 20.2 kg of base pellets of the type discussed above. The loading was carried out at a pressure of 51 kPa which was held for 30 seconds before returning to atmospheric pressure.

The resulting pellets were then further loaded with 1.2 kg of an oil formed from 98 parts by weight of fish oil and 2 parts by weight of hydrogenated rapeseed oil (Akofine R®).

### Feed 2 (Comparison)

Feed 2 was prepared in accordance with the production method of Feed 1, except that the composition loaded onto the base pellets consisted of a suspension of 8.6 parts by weight Natupink® (a product of Gist-Brocades) without enzyme treatment in 91.4 parts by weight of fish oil. Natupink® is a yeast containing 0.5% by weight astaxanthin.

### Feed 3 (Comparison)

Feed 3 was prepared by adding enzyme untreated Carophyll® Pink to the base pellet material before its extrusion into pellets. The constitution of the base pellets was the same as that described above except that the amount of pre-processed corn starch was reduced by 0.8% to 21.5%, and replaced with a Carophyll® Pink/wheat pre-mix having respective relative amounts by weight of 12:88 . The base material was then extruded into pellets in the same way as described above.

### Feed 4 (Comparison)

Feed 4 was prepared in accordance with the production method of Feed 1, except that the coating composition consisted of a suspension of 0.7 pans by weight of intact Carophyll® pink beadlets and 99.3 parts by weight of fish oil.

### (i) Microscopic Evaluation

Feeds 1, 2 and 4 were examined under the microscope. Feed 1 showed no Carophyll® Pink particles on its surface, whilst Feed 2 showed particles having a diameter of approximately 50 µm on its surface. The pellets of Feed 4 were found to have a considerable number of Carophyll® Pink beadlets deposited on their surfaces which could be easily removed mechanically.

### (ii) Loss of pigment in water

Feeds 1, 2 and 4 were placed on a piece of steel net in a beaker containing 300 ml of a 3% saline solution which was stirred with a rotating magnet under the net. The saline solution temperature was 20°C. After stirring for one minute the following was observed:

Feed 1 showed no loss of pigment. Feed 2 lost approximately 7.5% of the pigment and the solution adopted a weak colour. Feed 4 lost approximately 30% of the coated pigment. This lost pigment did not however dissolve.

### (iii) Storage Stability

Feeds 1 to 3 were stored for a period of seventeen weeks in the dark at ambient temperature (about 20°C) with the amount of retained pigment in mg per kilo of feed being determined after six and seventeen weeks. The results are summarized in the Table below.

**Table**

| Time | Week 0 | Week 6 | Week 17 |
|---|---|---|---|
| Feed 1 | 64 | 60 | 56 |
| Feed 2 | 61 | 49 | 37 |
| Feed 3 | 67 | 61 | 57 |

From the above it may be seen that after six weeks' storage, Feed 1 retains 93% of the pigment and after seventeen weeks 87% of the pigment are still active. Feed 2, on the other hand, retains only 80% of the pigment after six weeks and only 61% after seventeen weeks. Finally, Feed 3 retains 91% after six weeks whilst after seventeen weeks 85% of the pigment is still present. Feeds 1 and 3 therefore possess similar storage stability, whereas the Feed 2 is must less stable.

### (iv) pigmentation of Salmon

140 kg of each of the Feeds 1, 2 and 3 were fed over a four-month period to 20 salmon having an initial weight of 250 g in three separated feeding cages. The pigmentation of the fish was evaluated as the astaxanthin content in the muscle tissue (ppm) and according to the Roche Colour Card score (RCC). The results were as follows.

**Table**

| Diet | ppm Astaxanthin in muscle tissue | RCC |
|---|---|---|
| Feed 1 | 5.0 | 13.6 |
| Feed 2 | 4.1 | 12.9 |
| Feed 3 | 4.9 | 13.2 |

The above clearly shows that the coated feed pellets according to the present invention are not only superior in storage stability but also lead to increased pigmentation. The coated feed pellets produced according to the method of the present invention thus constitute a high quality feed.

## Claims

1. A method for loading a bioactive ingredient into feed pellets, the bioactive ingredient having a protective shell formed from gelatin or a carbohydrate coated around it, comprising the steps of:
(i) removing the gelatin or carbohydrate protective shell from around the bioactive ingredient enzymatically or by hydrolysis;
(ii) mixing the uncoated bioactive ingredient with a fat or oil; and
(iii) loading porous precursor feed pellets with the resulting mixture to produce feed pellets.

2. A method according to Claim 1, wherein the bioactive ingredient is a pigment.

3. A method according to Claim 2, wherein the pigment is one or more of astaxanthin, canthaxanthin, zeaxanthin and β-carotene.

4. A method according to Claim 1, wherein the shell is removed enzymatically using a proteolytic enzyme.

5. A method according to any preceding Claim, wherein the loading step (iii) is carried out at below ambient pressure.

6. A method according to Claim 5, wherein the loading step (iii) comprises the steps of:
subjecting the porous precursor feed pellets to reduced pressure;
simultaneously or subsequently contacting the pellets with the mixture of bioactive ingredient and fat or oil; and
increasing the pressure to load the pellets with the mixture.

## Patentansprüche

1. Verfahren zum Beladen eines bioaktiven Inhaltsstoffs in Futterpellets, wobei der bioaktive Inhaltsstoff eine Schutzhülle hat, die aus Gelatine oder einem Kohlenhydrat besteht, die darum gehüllt ist, umfassend die Schritte:
(i) Enzymatisches oder hydrolytisches Entfernen der Gelatine oder Kohlenhydratschutzhülle um den bioaktiven Inhaltsstoff;
(ii) Mischen des nicht umhüllten bioaktiven Inhaltsstoffs mit einem Fett oder Öl; und
(iii) Beladen poröser Vorläuferfutterpellets mit der erhaltenen Mischung, um Futterpellets zu produzieren.

2. Verfahren gemäß Anspruch 1, wobei der bioaktive Inhaltsstoff ein Pigment ist.

3. Verfahren gemäß Anspruch 2, wobei das Pigment eines oder mehrere aus der Gruppe Astaxanthin, Canthaxanthin, Zeaxanthin und β-Karotin ist.

4. Verfahren gemäß Anspruch 1, wobei die Hülle unter Verwendung eines proteolytischen Enzyms enzymatisch entfernt wird.

5. Verfahren gemäß einem der vorhergehenden Ansprüche, wobei der Beladungsschritt (iii) unterhalb des Umgebungsdrucks durchgeführt wird.

6. Verfahren gemäß Anspruch 5, wobei der Beladungsschritt (iii) die Schritte umfasst:
die porösen Vorläuferfutterpellets werden einem reduziertem Druck ausgesetzt;
gleichzeitiges oder aufeinander folgendes Inkontaktbringen der Pellets mit der Mischung des bioaktiven Inhaltsstoffs und Fett oder Öl; und
Erhöhen des Drucks, um die Pellets mit der Mischung zu beladen.

## Revendications

1. Procédé de chargement d'un ingrédient bioactif dans des granulés alimentaires, l'ingrédient bioactif ayant une enveloppe de protection formée à partir de gélatine ou d'un hydrate de carbone déposé autour de celui-ci, comprenant les étapes consistant à :
(i) enlever l'enveloppe de protection de gélatine ou de l'hydrate de carbone autour de l'ingrédient bioactif de manière enzymatique ou par hydrolyse ;
(ii) mélanger l'ingrédient bioactif non revêtu avec une graisse ou une huile ; et
(iii) charger les granulés alimentaires précurseurs poreux avec le mélange résultant pour produire des granulés alimentaires.

2. Procédé selon la revendication 1, dans lequel l'ingrédient bioactif est un pigment.

3. Procédé selon la revendication 2, dans lequel le pigment est un ou plusieurs de astaxanthine, canthaxanthine, zéaxanthine et β-carotène.

4. Procédé selon la revendication 1, dans lequel l'enveloppe est enlevée de manière enzymatique en utilisant une enzyme protéolytique.

5. Procédé selon l'une quelconque des revendications précédentes, dans lequel l'étape de chargement (iii) est effectuée au-dessous de la pression ambiante.

6. Procédé selon la revendication 5, dans lequel l'étape de chargement (iii) comprend les étapes consistant à :
soumettre les granulés alimentaires précurseurs poreux à une pression réduite ;
simultanément, ou ultérieurement, mettre en contact les granulés avec le mélange d'ingrédient bioactif et de graisse ou d'huile ; et
augmenter la pression pour charger les granulés avec le mélange.
